# EUROPEAN PATENT APPLICATION

(11) **EP 0 581 742 A1**
(43) Date of publication of application: **02.02.1994**
(21) Application number: 93830219.7
(22) Date of filing: 24.05.1993
(51) Int. Cl.: C03B 27/044

(54) **A plant for tempering, in particular sheets of glass and the like**

(30) Priority: 31.07.1992 IT MO920106
(71) Applicant: POPPI S.p.A., I-42014 Castellarano (Reggio Emilia) (IT)
(72) Inventor: Severi, Alberto, I-41100 Modena (IT)
(74) Representative: Lanzoni, Luciano

(57) **Abstract**

The cooling of sheets of glass (3) transported on a roller conveyor plane (1) is performed by means of a double plurality of blower nozzles (5 and 6) arranged on distributor hoods (15 and 16) in order to operate on both faces of the glass sheet (3). During the transport of the glass sheets (3) along the roller conveyor plane (1), the upper nozzles (5), arranged on the distributor cover (15) and the lower nozzles (6), arranged on the distributor cover (16), are subjected to an alternating or oscillating movement in a transversal direction to the transport direction of the glass sheets (3).

## Description

The invention concerns a plant for tempering in particular sheets of glass and the like.

The prior art teaches plants for the tempering of sheets of glass which effect the cooling of the sheet by causing each of its opposite surfaces to be sprayed by violent and uniformly distributed jets of air. During the cooling the sheet is not kept still, but is horizontally translated by a roller conveyor plane on which the sheet is resting. Such traditional systems are not able to avoid the manifestation, in the products, of surface defects such as ondulations, ribbing and the like. The presence of such defects seems to be attributable to an insufficient cooling uniformity over the sheet of glass, notwithstanding a uniform distribution of the jets of air and thus of the nozzles which generate the said jets, directed on to the surface of the sheets of glass.

The present invention, as it is characterised in the claims that follow, proposes to obviate the above- mentioned drawbacks, through a simple and functional solution.

Further characteristics and advantages of the present invention will better emerge from the detailed description that follows, of an embodiment of the invention, herein illustrated purely in the form of a nonlimiting example in the accompanying figures, in which:

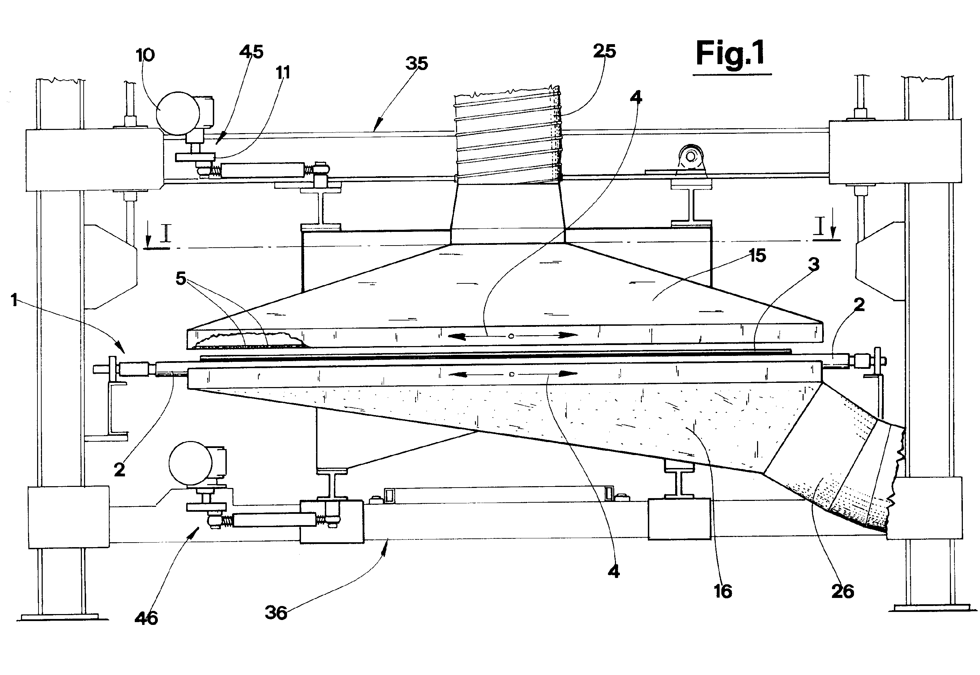

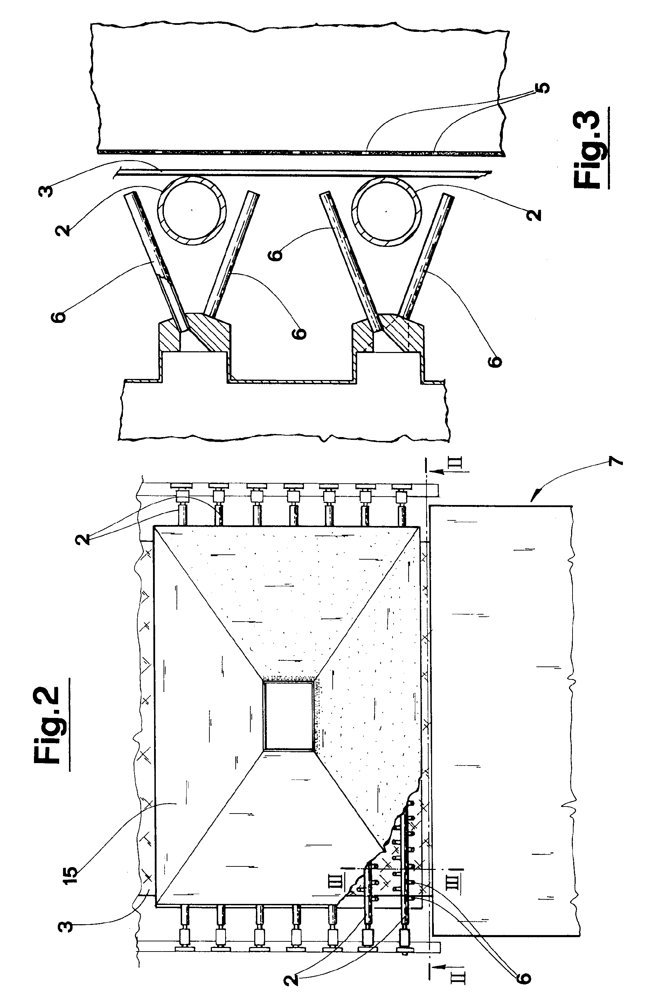

- figure 1 shows a schematic section made according to line II-II of figure 2;
- figure 2 shows, in reduced scale, a schematic section made according to line I-I of figure 1;
- figure 3 shows in enlarged scale, a particular of the section made according to line III-III of figure 2.

With reference to the figures, 1 denotes a roller conveyor plane 1 formed by a plurality of identical rollers 2 which are parallel and made to rotate about their respective axes by an appropriate mechanism which is not illustrated in the accompanying figures.

The roller conveyor plane 1 is connected to the exit of a kiln 7 in which the flat sheets of glass 3 are kept until they have reached the pre-established temperature for tempering. The plane 1 functions as a rest plane for the sheets of glass 3 which have exited from the kiln 7, as well as transporting the sheets of glass and translating them in the direction indicated by the arrows 4 during the execution of the rapid cooling.

The cooling is effected by striking the upper and lower surfaces of the sheet of glass 3 with air from a plurality of high-speed air jets, which air is emitted by a plurality of upper nozzles 5 and a plurality of lower nozzles 6. The upper nozzles 5 have their outlet mouths arranged on a plane parallel to the roller conveyor plane 1 and are uniformly distributed over a portion of surface that extends along and parallel to the said roller conveyor plane 1. The upper nozzles 5 are fixed to the structure of a distributor hood 15 which is fed with pressurised air by means of a flexible feeding conduit 25.

Similarly the lower nozzles 6 are uniformly distributed over a portion of horizontal surface which is parallel to, facing and close to the inferior surface of the roller conveyor plane 1. The lower nozzles 6 are, like the upper nozzles 5, also fixed to the structure of a distributor hood 16 which is fed by means of pressurised air through a flexible conduit 26. The distributor hood 15 is suspended from an external frame 35 with the possibility of translating in the two direction senses, indicated by the arrows 4, parallel to the roller conveyor plane 1 and perpendicular to the movement transport direction of the said roller conveyor plane 1. The distributor hood 16 is fixed on an external frame 36 with the possibility of translating in the two senses allong the direction, indicated by the arrows 4, parallel to the roller conveyor plane 1 and per- pendicularto the transport direction. Amechanism 45 comprising for example a motor 10 and a crank mechanism 11 has the task of moving the hood 15 in alternating directions. A similar mechanism 46 moves the hood 16 in alternating directions. The runs of the said alternating movements are measured in "steps" between the upper nozzles 5 of the distributor hood 15 and the steps between the lower nozzles 6 of the distributor hood 16 evaluated in the direction of the runs themselves.

In particular, the run of the alternating movement of the upper distributor hood 15 is about equal to the "step", evaluated in the same direction, of the upper nozzles 5. Similarly the run of the alternating movement of the distributor hood 16 is about the same as the "step" of the lower nozzles 6. The frequency of the alternating movement of the nozzles 5 and 6 corresponds to the speed with which the sheet of glass 3 is made to translate on the rollers.

By combining the tranlation speed of the sheet of glass 3 with the transversal oscillation of the nozzles 5 and 6, glass sheet cooling conditions are obtained which permit of obtaining a better tempering with respect to the tempering which can be obtained by means of the prior art which teaches the use of static nozzles.

## Claims

1. A plant for tempering in particular sheets of glass and the like, of the type using a roller conveyor plane (1) on which sheets of glass (3) are transported and a plurality of nozzles (5 and 6) arranged superiorly and inferiorly to the said roller conveyor plane (1), said nozzles (5 and 6) having the function of emitting violent jets of cooling air respectively against an inferior and a superior surface of the sheets of glass (3), characterised in that at least a part of the said nozzles (5 and 6) is mobile, with an alternating movement, in a transversal direction with respect to the movement direction of the said roller conveyor plane (1).

2. A plant as in claim 1, characterised in that the said nozzles (5 and 6) positioned superiorly and inferiorly to the said roller conveyor plane (1) are uniformly distributed on parallel facing surfaces which are close to each other with respect to a rest surface, said rest surface being the said roller conveyor plane (1); the said nozzles (5), as well as the said nozzles (6) being constrained respectively to a superior distributor hood (15) and an inferior distributor hood (16) which are guided and commanded to make alternating translating movements in a transversal direction to a transport movement direction of the said roller conveyor plane (1).

3. A plant as in claim 2, characterised in that the said alternating translating movements of the said upper nozzles (5) and the said lower nozzles (6) have runs, in a transversal direction to the movement direction of the said roller conveyor plane (1), which are equal to the distances measured, in the same direction as the said alternating movements, respectively between two said contiguous nozzles (5) and two said contiguous nozzles (6).
